# EUROPÄISCHE PATENTSCHRIFT

(11) **EP 4 196 356 B1**
(45) Veröffentlichungstag und Bekanntmachung des Hinweises auf die Patenterteilung: **30.04.2025**
(21) Anmeldenummer: 21751972.7
(22) Anmeldetag: 27.07.2021
(51) Int. Cl.: B60C 9/00, B60C 9/22

(54) **FAHRZEUGLUFTREIFEN**
PNEUMATIC VEHICLE TIRE
BANDAGE PNEUMATIQUE DE VÉHICULE

(30) Priorität: 14.08.2020 DE 102020210392
(43) Veröffentlichungstag der Anmeldung: 21.06.2023
(73) Patentinhaber: Continental Reifen Deutschland GmbH, 30175 Hannover (DE)
(72) Erfinder: REESE, Wolfgang, 30165 Hannover (DE)
(74) Vertreter: Continental Corporation
(86) Internationale Anmeldenummer: PCT/DE2021/200099
(87) Internationale Veröffentlichungsnummer: WO 2022/033640

(56) Entgegenhaltungen:
- EP-A1- 1 671 813
- EP-A1- 2 576 245
- DE-A1- 102010 017 107
- DE-A1- 102010 036 760

## Beschreibung

Die Erfindung betrifft einen Fahrzeugluftreifen radialer Bauart mit einem Laufstreifen, einer Radialkarkasse, einem Gürtelverband mit mindestens zwei Gürtellagen und mit zumindest einer Gürtelbandagenlage, welche radial außerhalb des Gürtels angeordnet ist, wobei die Gürtelbandagenlage Korde aus wenigstens zwei miteinander verdrehten Multifilamentgarnen umfasst, welche innerhalb der Gürtelbandagenlage parallel zueinander angeordnet sind und wobei die Multifilamentgarne aus recyceltem Polyethylenterephthalat (rPET) bestehen.

Ein derartiger Fahrzeugluftreifen ist aus der EP 257 62 45 B1 bekannt. Recyceltes PET (rPET) wird nicht unmittelbar aus fossilen Rohstoffen gewonnen, sondern wird zu 100% aus bereits verwendeten PET-Altprodukten, wie z.B. PET-Getränkeflaschen, zurückgewonnen. Dabei wird das bereits verwendete PET-Material gereinigt, geschreddert und per Schmelzspinnverfahren zu einer Faser extrudiert, welche zu Multifilamentgarnen und Korden weiterverarbeitet wird. Diese Wiederverwendung von PET-Altmaterial für Festigkeitsträger von Fahrzeugluftreifen ist umweltfreundlich und ressourcenschonend.

Ein- oder mehrlagige Gürtelbandagen sind dem Fachmann hinreichend bekannt.

Ferner ist aus der EP 1 671 813 B1 bekannt, für die Gürtelbandagenlagen von Fahrzeugluftreifen einen PET-Kord zu verwenden, welcher ein Elastizitätsmodul von nicht weniger als 2,5 mN/dtex % unter einer Last von 29,4 N aufweist, gemessen bei 160°C. Darüber hinaus ist der Kord mit einer haftverbessernden Zusammensetzung behandelt, die ein thermoplastisches Polymer, ein hitzehärtbares, wässriges Polyuhrethanharz und eine Epoxydharzverbindung aufweist. Es ist ferner üblich, in den Bandagenlagen eines Fahrzeugluftreifens Nylonkorde, insbesondere PA 6.6, zu verwenden. Wegen des vergleichsweise geringen Zugmoduls von Nylonkorden ist es für bestimmte Anwendungsfälle, insbesondere wenn die Hochgeschwindigkeitshaltbarkeit des Reifens von Bedeutung ist, notwendig, zwei Bandagenlagen mit Nylonkorden als Festigkeitsträger vorzusehen. Die Hauptaufgabe von Bandagenlagen in Reifen ist es, Relativbewegungen an den seitlichen Gürtellagenkanten zu verhindern, um eine Separation der Gürtellagenkanten zu vermeiden.

Aus der DE 10 2010 036 760 A1 ist ein Fahrzeugluftreifen mit zumindest einer Gürtelbandagenlage, welche PET-Korde enthält, bekannt. Der PET-Kord weist bei einer Kraft von 1,56 cN/detx bei 20°C eine Dehnung von 3% bis 5% und bei 160°C eine Dehnung von 7% bis 9% auf. Die Summe aus der Bruchdehnung des PET-Kords und der Wärmeschrumpfung, ermittelt bei 180°C, bei einer Vorspannkraft von 0,01 cN/dtex und einer Wirkungsdauer von zwei Minuten, ist größer als 20%. Der PET-Kord weist eine Wärmeschrumpfung, ermittelt bei 180°C, bei einer Vorspannkraft von 0,01 cN/dtex und einer Wirkungsdauer von zwei Minuten, von größer als 2,5% auf. Der PET-Kord verhindert die Gürtelkantenseparation, gewährleistet eine gute Hochgeschwindigkeitshaltbarkeit sowie eine hohe Lebensdauer des Reifes und reduziert den Flatspoteffekt.

Der Erfindung liegt die Aufgabe zugrunde, einen rPET-Kord für die Gürtelbandagenlage(n) zur Verfügung zu stellen, welcher selbst bei etwaiger einlagiger Ausführung der Bandage sicherstellt, dass der Reifen eine gute Hochgeschwindigkeitshaltbarkeit, eine hohe Lebensdauer und einen verminderten Flatspoteffekt aufweist.

Gelöst wird die gestellte Aufgabe erfindungsgemäß durch einen Fahrzeugluftreifen gemäß dem Anspruch 1.

Eine mit einem derartigen rPET-Kord versehene Gürtelbandagenlage im Fahrzeugluftreifen ist umweltfreundlich, verhindert wirkungsvoll eine Gürtelkantenseparation, gewährleistet eine gute Hochgeschwindigkeitshaltbarkeit, eine hohe Lebensdauer des Reifens und reduziert den Flatspoteffekt.

Ein Filamentgarn aus recyceltem PET (rPET) hat üblicherweise einen geringeren Modul als ein Filamentgarn aus nicht recyceltem PET. Die erfindungsgemäßen rPET-Kord-Eigenschaften werden überraschenderweise durch die Nettoverstreckung (Summe der Verstreckung des Festigkeitsträgers in den einzelnen Öfen beim Durchlaufen des Konvertierprozesses) von 3% bis 6%, bevorzugt von 3,5% bis 5% erreicht. Ein Kord aus nicht recyceltem PET mit vergleichbarem Zugmodul durchläuft maximal eine Nettoverstreckung von 1,5%. Der Konvertierprozess mit Verstreckung von entsprechenden Festigkeitsträgern ist dem Fachmann hinreichend bekannt.

Einige Kordparameter sind besonders wesentlich, um das Erzielen dieser Effekte zu unterstützen. Von Bedeutung ist beispielweise die Gesamtfeinheit des Kordes, der erfindungsgemäße rPET-Kord sollte eine Gesamtfeinheit zwischen 500 dtex und 6000 dtex, insbesondere zwischen 500 dtex und 3500 dtex, aufweisen. Des Weiteren sollte der rPET-Kord einen Kordtwist zwischen 150 tpm und 650 tpm, insbesondere zwischen 200 tpm und 650 tpm, aufweisen.

Als besonders günstig für die Verhinderung einer Separation der Gürtellagenkanten, für eine gute Hochgeschwindigkeitshaltbarkeit und eine hohe Lebensdauer des Reifens hat sich eine Anordnung des erfindungsgemäßen rPET-Kordes in der Bandagenlage mit 60 epdm bis 160 epdm, insbesondere mit 80 epdm bis 140 epdm, erwiesen. Dabei ist lediglich eine einzige Bandagenlage erforderlich.

Ein erfindungsgemäßer Fahrzeugluftreifen weist in einer weiteren Ausführungsform eine mehrlagige, insbesondere 2-lagige Gürtelbandage auf.

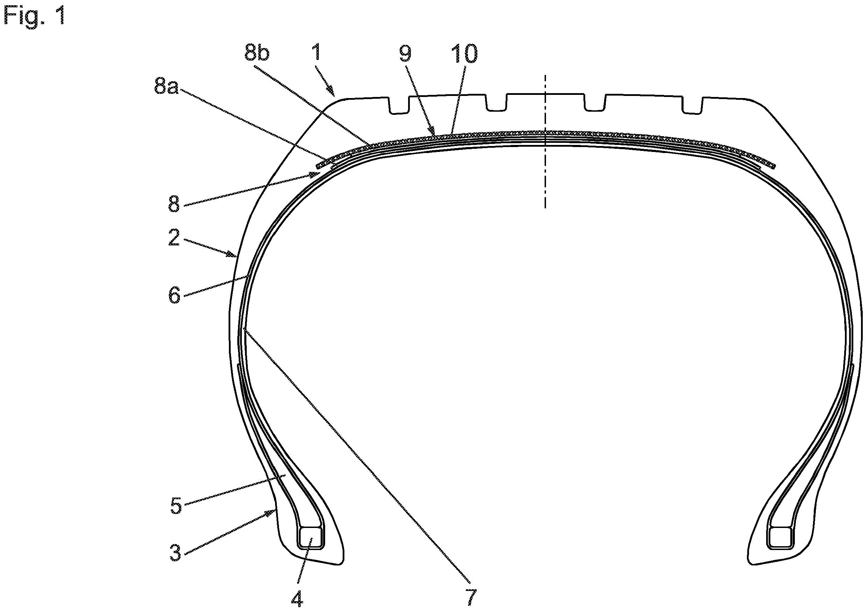

Weitere Merkmale, Vorteile und Einzelheiten der Erfindung werden nun anhand der Zeichnung, die ein Ausführungsbeispiel darstellt, näher beschrieben. Dabei zeigt die einzige Figur, Fig. 1, schematisch einen Querschnitt durch einen Fahrzeugluftreifen.

Der in Fig.1 gezeigte Fahrzeugluftreifen ist ein Reifen für Personenkraftwagen radialer Bauart und weist einen Laufstreifen 1, Seitenwände 2, Wulstbereiche 3 mit Wulstkernen 4 und Wulstprofilen 5, ferner eine Karkasslage 6, welche die beiden Wulstkerne 4 umläuft, eine Innenschicht 7 sowie eine zwischen der Karkasslage 6 und dem Laufstreifen 1 angeordneten Gürtelverband 8 auf. Der Gürtelverband 8 weist bei der gezeigten Ausführungsform zwei Gürtellagen 8a und 8b auf, welche in bekannter Weise aus in eine Gummimischung eingebetteten, parallel zueinander verlaufenden Festigkeitsträgern aus Stahlkord bestehen können. Die Stahlkorde in der einen Gürtellage 8a verlaufen dabei gekreuzt zu den Stahlkorden in der anderen Gürtellage 8b und schließen mit der Reifenumfangsrichtung einen der üblichen Winkel in der Größenordnung von 20° bis 35° ein. Radial außerhalb der beiden Gürtellagen 8a, 8b befindet sich eine Bandagenlage 9 - eine cap-ply Lage - welche durch kontinuierliches und spiralförmiges Wickeln eines Kordes 10 aus rPET (recyceltes Polyethylenterephtalat) in Umfangsrichtung des Reifens gebildet wird und die seitlichen Randkanten des Gürtelverbandes 8 überdeckt.

Gemäß der Erfindung wird ein rPET-Kord 10 der Konstruktion 1100 dtex x 2 oder 1440 dtex x 2 oder 720 dtex x 2 oder 550 dtex x2 oder 1670 dtex x2 verwendet, welcher folgende Eigenschaften aufweist: Unter der Wirkung einer Kraft von 1,56 cN/dtex, bei einer Temperatur von 20°C, ist die Dehnung des Kordes 10 zwischen 2% und 5 %, bei einer Temperatur von 120°C zwischen 6% und 9 %. Bei einer über einen Zeitraum von zwei Minuten und bei einer Temperatur von 180°C wirkenden Vorspannkraft von 0,01 cN/dtex ist die Summe aus Bruchdehnung und Wärmeschrumpfung größer als 17 %. Des Weiteren ist die Wärmeschrumpfung bei 180°C und unter der Wirkung einer Vorspannkraft von 0,01 cN/dtex, Wirkdauer zwei Minuten, größer als 2,5 %. Die Nettoverstreckung (Summe der Verstreckung des Festigkeitsträgers in den einzelnen Öfen beim Durchlaufen des Konvertierprozesses) liegt in einem Bereich von 3% bis 6%, bevorzugt in einem Bereich von 3,5% bis 5%.

Der erfindungsgemäße rPET-Kord 10 weist hier eine Gesamtfeinheit zwischen 1100 dtex und 3340 dtex auf. Insbesondere wird der rPET-Kord 10 mit einem Kordtwist zwischen 150 und 650 tpm (Turns pro Meter), insbesondere zwischen 200 tpm und 650 tpm, verwendet.

Der gegenseitige Abstand beim Wickeln des rPET-Kordes 10 zum Bilden der Gürtelbandage wird derart eingestellt, dass in der fertigen Bandagenlage zwischen 60 und 160 epdm (ends per decimeter) vorliegen. Bei einer bevorzugten Ausführungsform der Erfindung weist die Bandagenlage 9 zwischen 80 epdm und 140 epdm auf.

Ein Reifen mit einer einzigen erfindungsgemäß ausgeführten Bandagenlage 9 weist eine Hochgeschwindigkeitshaltbarkeit auf, welche mit Reifen mit bekannten zweilagigen Ausführungen der Bandage mit Nylon 6.6 als Festigkeitsträger vergleichbar ist. Ein weiterer vorteilhafter Effekt der erfindungsgemäßen Bandagenlage besteht in der besseren Robustheit gegenüber stoßartig wirkenden Belastungen, ohne dass die Gefahr von Kordbrüchen in den Gürtellagen besteht. Gegenüber den üblicherweise eingesetzten Nylonkorden ist bei einem erfindungsgemäß ausgeführter Reifen der Flatspoteffekt (eine temporäre Verformung des Footprints des Reifens beim Parken) deutlich verringert und gegenüber herkömmlichen Korden umweltfreundlicher.

### Bezugszeichenliste

- 1: Laufstreifen
- 2: Seitenwand
- 3: Wulstbereich
- 4: Wulstkern
- 5: Wulstprofil
- 6: Karkasslage
- 7: Innenschicht
- 8: Gürtelverband
- 8a: Gürtellage
- 8b: Gürtellage
- 9: Bandagenlage
- 10: rPET-Kord

## Patentansprüche

1. Fahrzeugluftreifen radialer Bauart mit einem Laufstreifen (1), einer Radialkarkasse, einem Gürtelverband (8) mit mindestens zwei Gürtellagen (8a, 8b) und mit zumindest einer Gürtelbandagenlage (9), welche radial außerhalb des Gürtels angeordnet ist, wobei die Gürtelbandagenlage (9) Korde aus wenigstens zwei miteinander verdrehten Multifilamentgarnen umfasst, welche innerhalb der Gürtelbandagenlage (9) parallel zueinander angeordnet sind und wobei die Multifilamentgarne aus recyceltem Polyethylenterephthalat (rPET) bestehen,
wobei der rPET-Kord (10) bei einer Kraft von 1,56 cN/detx bei 20°C eine Dehnung von 2% bis 5 % und bei 120°C eine Dehnung von 6% bis 9 % aufweist,
wobei die Summe aus der Bruchdehnung des rPET-Kordes (10) und der Wärmeschrumpfung, ermittelt bei 180°C, bei einer Vorspannkraft von 0,01 cN/dtex und einer Wirkungsdauer von zwei Minuten, größer ist als 17 %,
wobei der rPET-Kord (10) eine Wärmeschrumpfung, ermittelt bei 180 °C, bei einer Vorspannkraft von 0,01 cN/dtex und einer Wirkungsdauer von zwei Minuten, größer als 2,5 % aufweist und
wobei die Nettoverstreckung des rPET-Kords (10) in einem Bereich von 3% bis 6%, bevorzugt in einem Bereich von 3,5% bis 5%, liegt.

2. Fahrzeugluftreifen nach Anspruch 1, **dadurch gekennzeichnet, dass** der rPET-Kord (10) eine Gesamtfeinheit zwischen 500 dtex und 6000 dtex, bevorzugt zwischen 500 dtex und 3500 dtex, aufweist.

3. Fahrzeugluftreifen nach Anspruch 1 oder 2, **dadurch gekennzeichnet, dass** der rPET- Kord (10) einen Kordtwist zwischen 150 tpm und 650 tpm, bevorzugt zwischen 200 tpm und 650 tpm, aufweist.

4. Fahrzeugluftreifen nach einem oder mehreren der Ansprüche 1 bis 3, **dadurch gekennzeichnet, dass** der rPET-Kord (10) die Konstruktion rPET 550 dtex x2, rPET 1100 dtex x 2, rPET 1440 dtex x 2, rPET 720 dtex x 2 oder rPET 1670 dtex x2 aufweist.

5. Fahrzeugluftreifen nach einem oder mehreren der Ansprüche 1 bis 4, **dadurch gekennzeichnet, dass** der rPET-Kord (10) in der Gürtelbandagenlage (9) mit 60 epdm bis 160 epdm, insbesondere mit 80 epdm bis 140 epdm, angeordnet ist.

## Claims

1. Pneumatic vehicle tire of radial construction having a tread (1), a radial carcass, a belt bandage (8) having at least two belt plies (8a, 8b) and having at least one belt bandage ply (9), which is arranged radially outside the bandage, wherein the belt bandage ply (9) comprises cords of at least two multifilament yarns twisted together which are arranged parallel to one another inside the belt bandage ply (9) and wherein the multifilament yarns are made of recycled polyethylene terephthalate (rPET),
wherein at a force of 1.56 cN/dtex the rPET cord (10) has an elongation of 2% to 5% at 20°C and an elongation of 6% to 9% at 120°C,
wherein the sum of the breaking elongation of the rPET cord (10) and the heat shrinkage determined at 180°C at a preload force of 0.01 cN/dtex and a time of exposure of two minutes is greater than 17%,
wherein the rPET cord (10) has a heat shrinkage determined at 180°C at a preload force of 0.01 cN/dtex and a time of exposure of two minutes of greater than 2.5% and
wherein the net stretch of the rPET cord (10) is in a range from 3% to 6%, preferably in a range from 3.5% to 5%.

2. Pneumatic vehicle tire according to Claim 1, **characterized in that** the rPET cord (10) has an overall fineness of between 500 dtex and 6000 dtex, preferably between 500 dtex and 3500 dtex.

3. Pneumatic vehicle tire according to Claim 1 or 2, **characterized in that** the rPET cord (10) has a cord twist between 150 tpm and 650 tpm, preferably between 200 tpm and 650 tpm.

4. Pneumatic vehicle tire according to one or more of Claims 1 to 3,
**characterized in that** the rPET cord (10) has the construction rPET 550 dtex x2, rPET 1100 dtex x 2, rPET 1440 dtex x 2, rPET 720 dtex x 2 or rPET 1670 dtex x2.

5. Pneumatic vehicle tire according to one or more of Claims 1 to 4,
**characterized in that** the rPET cord (10) is arranged in the belt bandage ply (9) with 60 epdm to 160 epdm, in particular with 80 epdm to 140 epdm.

## Revendications

1. Pneumatique de véhicule de type radial comportant une bande de roulement (1), une carcasse radiale, un système de ceinture (8) comportant au moins deux couches (8a, 8b) de ceinture et comportant au moins une couche de bandage (9) de ceinture qui est disposée radialement à l'extérieur de la ceinture, la couche de bandage (9) de ceinture comprenant des câbles constitués d'au moins deux fils multifilaments torsadés l'un avec l'autre, qui sont disposés parallèlement l'un à l'autre à l'intérieur de la couche de bandage (9) de ceinture, et les fils multifilaments étant constitués de poly(éthylène téréphtalate) recyclé (rPET),
dans lequel le câble en rPET (10) présente sous une force de 1,56 cN/dtex à 20 °C un allongement de 2 % à 5 % et à 120 °C un allongement de 6 % à 9 %,
dans lequel la somme de l'allongement à la rupture du câble en rPET (10) et du retrait à chaud, déterminé à 180 °C, sous une force de prétension de 0,01 cN/dtex et en une durée d'action de deux minutes, est supérieure à 17 %,
dans lequel le câble en rPET (10) présente un retrait à chaud, déterminé à 180 °C, sous une force de prétension de 0,01 cN/dtex et en une durée d'action de deux minutes, supérieur à 2,5 % et
dans lequel l'étirement net du câble en rPET (10) se situe dans une plage de 3 % à 6 %, de préférence dans une plage de 3,5 % à 5 %.

2. Pneumatique de véhicule selon la revendication 1, **caractérisé en ce que** le câble en rPET (10) présente une finesse totale comprise entre 500 dtex et
6 000 dtex, de préférence entre 500 dtex et 3 500 dtex.

3. Pneumatique de véhicule selon la revendication 1 ou 2, **caractérisé en ce que** le câble en rPET (10) présente une torsion de câble comprise entre 150 tpm et 650 tpm, de préférence entre 200 tpm et 650 tpm.

4. Pneumatique de véhicule selon une ou plusieurs des revendications 1 à 3, **caractérisé en ce que** le câble en rPET (10) présente la construction rPET 550 dtex x 2, rPET 1 100 dtex x 2, rPET 1 440 dtex x 2, rPET 720 dtex x 2 ou rPET 1 670 dtex x2.

5. Pneumatique de véhicule selon une ou plusieurs des revendications 1 à 4, **caractérisé en ce que** le câble en rPET (10) est disposé dans la couche de bandage (9) de ceinture avec 60 epdm à 160 epdm, en particulier avec 80 epdm à 140 epdm.
